# EUROPEAN PATENT APPLICATION

(11) **EP 1 788 294 A1**
(43) Date of publication of application: **23.05.2007**
(21) Application number: 05425808.2
(22) Date of filing: 16.11.2005
(51) Int. Cl.: F16L 33/22

(54) **Fitting with device to indicate the attainment of a pre-established pressure level when tightening. To be used in particular for connecting pipes nade of pliable materials**

(71) Applicant: Rezza, Antonino, 90151 Palermo (Sicilia) (IT)
(72) Inventor: Rezza, Antonino, 90151 Palermo (Sicilia) (IT)

(57) **Abstract**

The pipe (1) is fitted onto the union (2) and the ring nut (9), with an internal thread, is screwed onto the thread (8) of two semi-coques (6 and 7) until it reaches the reference teeth (17).

## Description

This invention rotates to a fitting which connects pipes made of pliable materials. It is equipped with at least one device for obtaining the pre-established pressure in order to be leak-proof. It can also be called a snap on fitting.

In hydraulics there are certain well-known elements which are used to connect two or more pipes of equal or different diameters, to create bends or to divert one pipe from another. These elements consist of a central part, through which the fluid passes, and threaded caps, which are tightened at the pipe unions over the ends of the pliable pipes.

Competent plumbers are able to tighten these elements on the pipes with the correct amount of pressure for the liquid that will pass through them. They do not tighten them too much and they do not tighten them too little.

Unfortunately, sometimes plumbers tighten them too little or too much. This can lead to leaks or to damage to the ends of the pipes, with a consequent reduction in their lifespan.

With the aim of avoiding these drawbacks electric machines have been built which tighten a metal sleeve over the end of the pipe once the corresponding pipe union has been fitted into it.

Whilst this system has the advantage of tightening the end of the tube over the pipe union with the right amount of pressure, there are also some drawbacks. The machine is very expensive, heavy and cumbersome and it runs on electricity, which is not always available. It is a great inconvenience for a plumber to have to buy one and always carry it with him. In addition, at times pipes have to be fitted in restricted spaces where there is not enough room for these machines and so it is impossible to operate them.

In addition to this, one must consider the fact that once the machine has been used to fit the metal sleeve, the only way of removing it is by destroying it, together with the end of the pipe that it is attached to. Therefore, if for some reason that part of the pipeline has to be dismantled, it is also necessary to replace the affected pipe, which could be relatively long. So both time and materials are wasted.

The aim of this invention is to eliminate all of the abovementioned inconveniences. It is based on the principle of equipping every outlet of the fitting with two valves that have at least one calibration tooth. Alternative names for the valves are semi-coques or semi-sleeves.

This invention is suitable for innumerable fittings, for example those with two outlets or three outlets,. multiple fittings with various numbers of outlets, elbow fittings and others.

With this invention every pipe union, of every outlet of every type of fitting has at least one narrowing and/or at least one ring-shaped projection able to guarantee constant and invariable immovability. This is disptayed by a resistance to any external and/or internal physical stress applied to the pliable pipe which is fitted onto the outside of the essentially cylindrical pipe union.

This invention is based on the principle of providing the pipe union of every outlet of the fitting with at least one essentially ring-shaped protrusion. One of the ends of each one of the abovementioned valves will be put on top of this protrusion. On the inner surface of the two valves there are indentations that are essentially the copy in reverse of the abovementioned protrusion on the corresponding pipe union.

Furthermore, this invention is also based on the principle that it comes with a pair of valves consisting of a male and a female. One is inserted into the other in order to make a connection which immobilises one end of the pipe at the fitting.

With the pipe fitting described here not only are all of the inconveniences that have previously been mentioned eliminated, there are also some advantages.

Indeed, with this invention the pipe fitting on its own is all that is needed to carrying out tightening to the pre-established pressure level, in order to maintain permanent watertightness in the related pipe. In addition, the pre-established pressure is applied over such a large area that it guarantees against collisions, vibrations, water hammer and sudden changes in pressure or temperature. Moreover, with this invention, the plumber only needs to carry with him the parts that make up the fitting. Therefore, he can travel light. On top of this, the fittings can be put into place even in the most restricted of areas. Furthermore the costs of both the metal sleeves and the machine for tightening these metal or plastic sleeves can be avoided. As well as this, once the pipe has been laid, it can be dismantled and refitted as often as necessary using the same parts and avoiding any wastage. Also, the fittings involved in this invention can be mass-produced at a very low cost, with plastic moulds and using standard techniques. Besides this, with this invention the fitting allows plumbing to be installed at very low costs, thanks to the simplicity and rapidity of the operation. Finally, the fittings in this invention increase the value of the plumbing system that they are used in. This is because of the reliability that they give to the entire system, thanks to the extremely long life span of the seal.

With reference to the attached drawings, some of the possible ways of putting this invention into practice will now be described in more detail as simple examples.
Figure 1 illustrates, in an exploded perspective view, all of the fitting featured in this invention and a section of pliable pipe, as it should be presented in front of the pipe union in order to be fitted.
Figure 2 illustrates, from a vertical view, all of the fitting featured in this invention.
Figure 3 illustrates the same things as seen in Figure 2, but in sections, through an elevation passing along the III - III line of Figure 2 itself.
Figure 4 illustrates, from a vertical view, the core of a fitting.
Figure 5 illustrates, from a perspective view, the shape of the internal part of the male semi-coque of the pipe-tightening clamp, a component of the fitting in this invention.
Figure 6 illustrates, in profile, the same semi-coque shown in Figure 5.
Figure 7 illustrates, from a perspective view, the form of the internal part of the female semi-coque of the pipe-tightening clamp, a component of the fitting in this invention.
Figure 8 illustrates, in profile, the same female semi-coque shown in **Figure 7.**
Figure 9 illustrates, in an exploded perspective view, the way in which the components shown in Figures 4 to 8 are assembled.

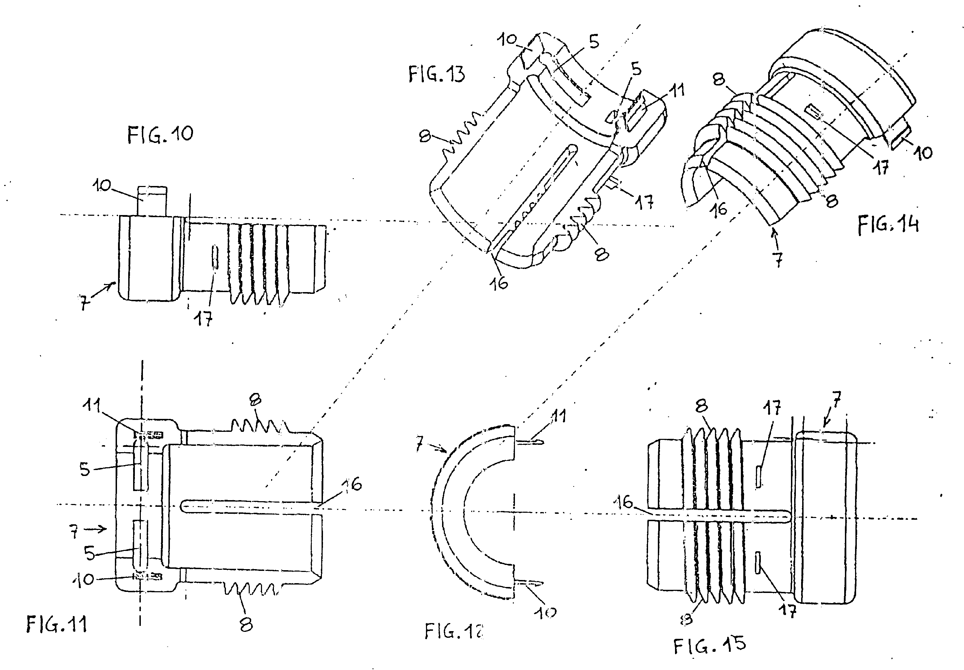

Figure 10 illustrates, from a side view, the male semi-coque, equipped with two protruding catches, for snap on closing.
Figure 11 is an overhead view of the interior of the part shown in Figure 10.
Figure 12 is a profile view of the part shown in Figures 10 and 11.
Figure 13 illustrates in perspective that which is shown in Figure 11.
Figure 14 is a perspective view of the external appearance of the part shown in Figures 10, 11, 12 and 13.

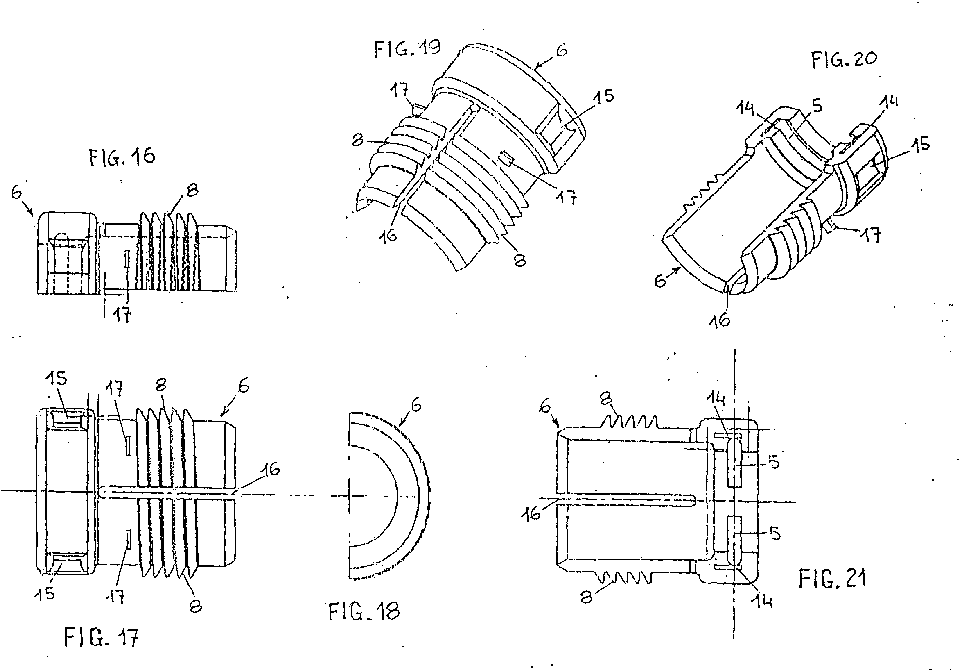

Figure 15 is an overhead view of Figure 14.
Figure 16 illustrates, from a side view, the female semi-coque, equipped with two indented locks, for snap on closing.
Figure 17 is an overhead view of the exterior of the part shown in Figure 16.
Figure 18 is a profile view of the part shown in Figures 16 and 17.
Figure 19 illustrates in perspective that which is shown in Figure 17.
Figure 20 is a perspective view of the internal appearance of the part shown in Figures 16, 17, 18 and 19.

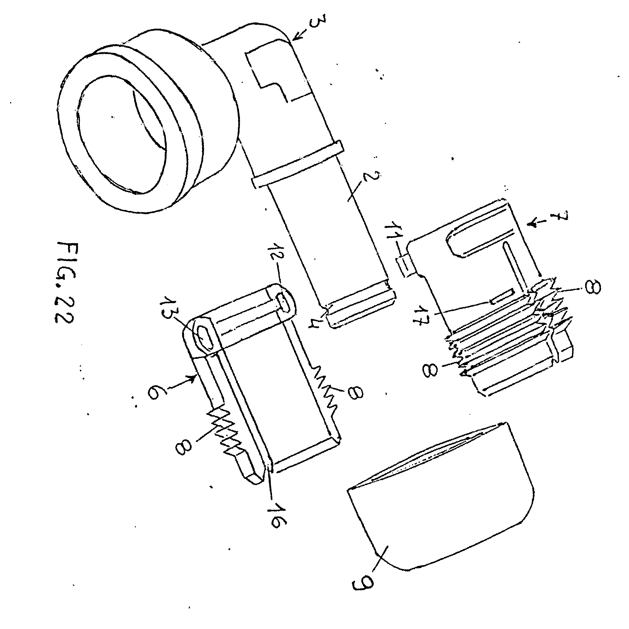

Figure 21 is an overhead view of Figure 20.
Figure 22 illustrates, in an exploded perspective view, all of the elbow fitting according to this invention.

The parts described here are available at low cost through mass production. Pressure moulding techniques, which it is not necessary to describe here, would be used.

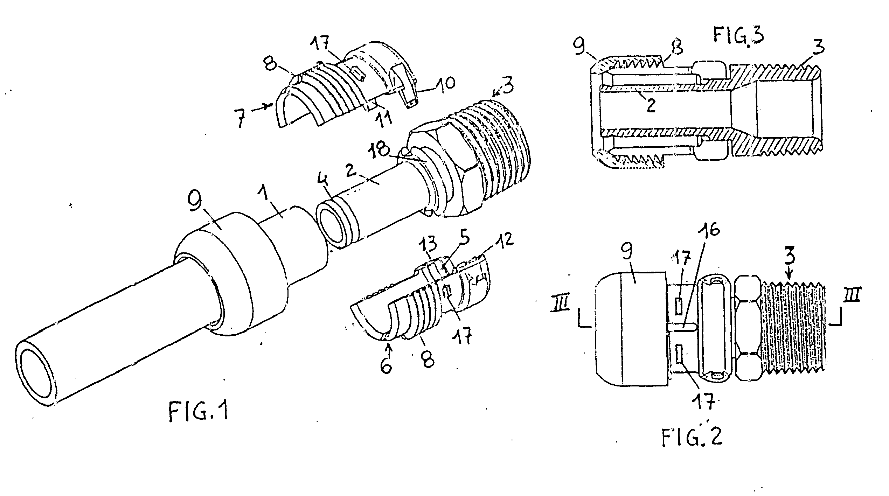

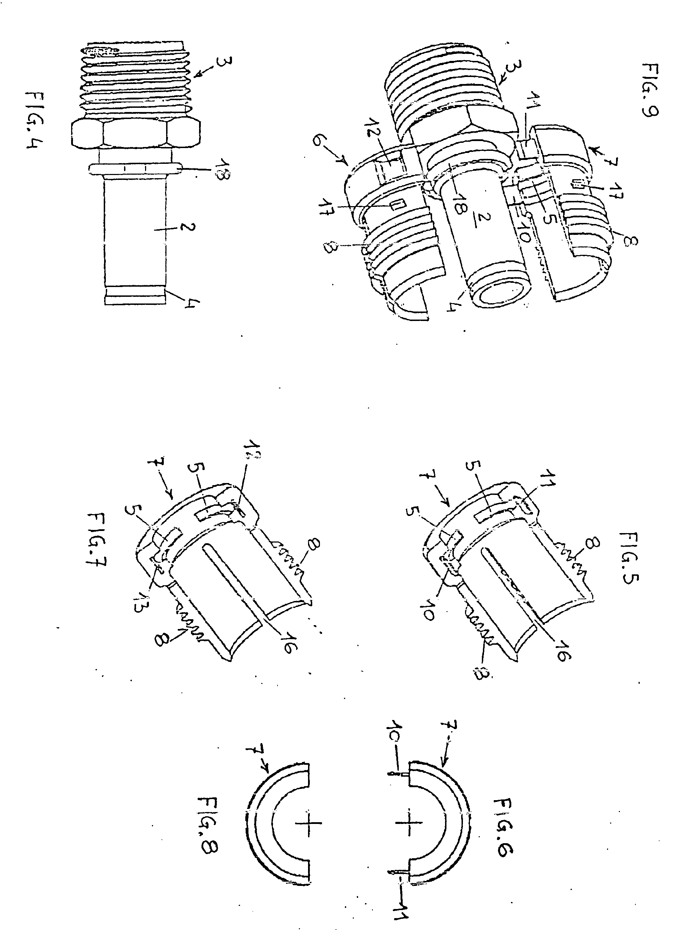

In Figures 1 to 3 one can see the end (1) of a pliable pipe which is fitted onto a pipe union (2) of a fitting (3). The cylindrical exterior of pipe union 2 has one or more narrowings (4), which the corresponding part of the interior of pipe 1 fits into, especially when the exterior of the corresponding end section of the pipe is pushed in by two valves or semi-coques, in the way which will be described below. The cylindrical exterior of pipe union 2 can also or alternatively have one or more protrusions, not shown in the drawings, which have the same function of preventing pipe 1 from involuntarily slipping out of pipe union 2.

At the starting point of pipe union 2, fitting 3 has a convex moulding with a more or less semi-circular profile, or a toroid, 18, which fits into groove 5 of the interior both of the female semi-coque (6) and the male semi-coque (7).

Both the female semi-coque (6) and the male semi-coque (7) have a semi-circular shape and so when they are put together, the method for which will be explained below, they essentially form a threaded cylindrical sleeve, with an external thread (8). Ring nut 9 is screwed onto this external thread. Two catches (10 and 11) protrude from the male semi-coque (7). For each of the two catches, the female semi-coque (6) has a fitting lock (12 and 13). Catches 10 and 11 would preferably be shaped like thin, straight plates; ending in a point. Lock 12 consists of a hole, with its entrance (14) in the flat interior of the semi-coque and the exit (15) in the semi-cylindrical exterior of the same semi-coque.

Both the female semi-coque (6) and the male semi-coque (7) have at least one slot cut into them (16). This is to make the interior of semi-coques 6 and 7 fit as closely as possible to the exterior of pipe 1 when ring nut 9 is completely screwed on. The result is that the connection between pipe 1 and fitting 3 is perfectly watertight.

Thanks to the abovementioned slots, the semi-coques (6 and 7) act almost as if they were made of two or more segments. From the exterior of every segment a reference tooth (17), or calibration tooth, protrudes perpendicularly. The reference, or calibration, tooth (17) is an integral part of the invention as it is necessary for the functioning of the device which indicates when the plumber connecting pipe 1 to fitting 3 has attained the pre-established tightening pressure of the interior of semi-coques 6 and 7 on the exterior of the pliable pipe end (1).

The manufacturer of the parts will include in the packaging the instructions for the person who is putting the fitting into place. These instructions will explain if the plumber will have to stop screwing ring nut 9 onto thread 8 when it comes into contact with the tooth (17), or with the teeth (17), or when the ring nut (9) has broken one tooth (17) or two, three or four teeth (17). It will also include any other explanations which might be necessary in order to obtain a perfect connection.

Since the invention has been described and represented in a simple and approximate way and not in a restrictive manner, it is clear that numerous modifications could be made to the whole design and to parts of it without straying from the basic principles which this invention is based on.

## Claims

1. Fitting for connecting pipes made of pliable material, **characterised by** at least one device used to obtain the pre-established pressure for watertightness in the union between the pipe and the fitting. Also known as a snap on fitting.

2. Fitting for connecting pipes made of pliable material, partly or totally like the one described in Claim 1, **characterised by** the fact that each outlet is equipped with two semi-coques that each have at least one calibration tooth.

3. Fitting for connecting pipes made of pliable material, partly or totally like one or both of the previous claims, **characterised by** the fact that each of its pipe unions has at least one narrowing and/or at least one ring-shaped protrusion which constantly and invariably guarantees immovability to the pipes when two semi-coques are simultaneously clamped onto both the core of the fitting and the cylindrical end section of the corresponding pliable, pipe.

4. Fitting for connecting pipes made of pliable material, partly or totally like one or more of the previous claims, **characterised by** the fact that the initial stretch of at least one pipe union has at least one, essentially ring-shaped, protrusion, which has one of the extremities of two semi-coques of a clamp positioned astride it.

5. Fitting for connecting pipes made of pliable material, partly or totally like one or more of the previous claims, **characterised by** at least two semi-coques with indentations in their interior that are essentially the copy in reverse of a protrusion on at least one pipe union on the fitting itself.

6. Fitting for connecting pipes made of pliable material, partly or totally like one or more of the previous claims, **characterised by** at least one pair of semi-coques, composed of a male semi-coque and a female semi-coque, one of which is inserted into the other in order to create a clamp which immobilises one end of a pipe on at least one pipe union of the fitting itself.

7. Fitting for connecting pipes made of pliable material, partly or totally like one or more of the previous claims, **characterised by** the fact that the cylindrical exterior of at least one pipe union (2) has at least one narrowing (4) which the corresponding part of the interior of a pipe (1) fits into, especially when the exterior of the corresponding end section of the pipe (1) is pushed in by two semi-coques (6 and 7).

8. Fitting for connecting pipes made of pliable material, partly or totally. like one or more of the previous claims, **characterised by** the fact that the cylindrical exterior of at least one pipe union (2) has at least one ring-shaped protrusion, or an O-Ring.

9. Fitting for connecting pipes made of pliable material, partly or totally like one or more of the previous claims, **characterised by** the fact that at the starting point of at least one pipe union (2), a fitting (3) has at least one convex moulding (18).

10. Fitting for connecting pipes made of pliable material, partly or totally like one or more of the previous claims, **characterised by** the fact that at the starting point of at least one pipe union (2), there is at least one convex moulding with an approximately semicircular toroidal profile (18).

11. Fitting for connecting pipes made of pliable material, partly or totally like one or more of the previous claims, **characterised by** the fact that at the starting point of at least one pipe union (2), there is at least one moulding (18) which slots into at least one groove (5) in the interior both of the female semi-coque (6) and the male semi-coque (7).

12. Fitting for connecting pipes made of pliable material, partly or totally like one or more of the previous claims, **characterised by** the fact that at the starting point of at least one pipe union (2), there is at least one essentially circular groove.

13. Fitting for connecting pipes made of pliable material, partly or totally like one or more of the previous claims, **characterised by** the fact that at the starting point of at least one pipe union (2), there is at least one groove which a protruding moulding from the interior of a pair of semi-coques (6 and 7) fits into.

14. Fitting for connecting pipes made of pliable material, partly or totally like one or more of the previous claims, **characterised by** at least one female semi-coque (6) and at least one male semi-coque (7), which each have a semi-cylindrical form and which, when they are put together, essentially form a cylindrical sleeve with an external thread (8).

15. Fitting for connecting pipes made of pliable material, parity or totally like one or more of the previous claims, **characterised by** at least one sleeve (6 and 7) which has an external thread (8) and which the internal thread of a ring nut (9) is screwed onto

16. Fitting for connecting pipes made of pliable material, partly or totally like one or more of the previous claims, **characterised by** at least one male semi-coque (7) with two protruding catches (10 and 11).

17. Fitting for connecting pipes made of pliable material, partly or totally like one or more of the previous claims, **characterised by** at least one female semi-coque (6) equipped with two fitting locks (12 and 13).

18. Fitting for connecting pipes made of pliable material, partly, or totally like one or more of the previous claims, **characterised by** at least one male semi-coque (7) with at least one catch protruding from it (10 and 11) which is made in a flat, straight and essentially pointed sheet shape.

19. Fitting for connecting pipes made of pliable material, partly or totally like one or more of the previous claims, **characterised by** at least one female semi-coque (6) equipped with fitting locks (12 and 13), each of which consists of a feeding hole that has an entrance (14) on the flat interior of the semi-coque and an exit (15) on its semi-cylindrical exterior.

20. Fitting for connecting pipes made of pliable material, partly or totally like one or more of the previous claims, **characterised by** at least one essentially semi-cylindrical semi-coque (6 and 7) which has at least one slot in it (16).

21. Fitting for connecting pipes made of pliable material, partly or totally like one or more of the previous claims, **characterised by** at least one semi-coque (6 and 7) which has at least one reference tooth or calibration tooth (17) protruding perpendicularly from its exterior.

22. Fitting for connecting pipes made of pliable material, partly or totally like one or more of the previous claims, **characterised by** the fact that the interior of two essentially semi-cylindrical semi-coques (6 and 7) clamps onto the exterior of the end section (1) of a pliable pipe when an internally threaded ring nut (9), is sufficiently screwed onto the external thread (8) of the abovementioned two semi-coques (6 and 7).

23. Fitting equipped with at least one device to signal that the pre-established tightening pressure has been obtained, particularly for connecting pipes made of pliable material, partly or totally like one or more of the previous claims and essentially similar to what has been described and represented, to be used for the purposes specified.
